# FASCICULE DE BREVET EUROPEEN

(11) **EP 2 506 795 B1**
(45) Date de publication et mention de la délivrance du brevet: **18.04.2018**
(21) Numéro de dépôt: 10805330.7
(22) Date de dépôt: 03.12.2010
(51) Int. Cl.: A61C 8/00

(54) **IMPLANT DENTAIRE A EMMANCHEMENT CONIQUE**
KONISCH VERJÜNGTES ZAHNIMPLANTAT
CONICALLY TAPERED DENTAL IMPLANT

(30) Priorité: 04.12.2009 FR 0958679
(43) Date de publication de la demande: 10.10.2012
(73) Titulaire: ANTHOGYR, 74700 Sallanches (FR)
(72) Inventeur: LANCIEUX, Cédric, F-26120 Chabeuil (FR); PRIOU, Catherine, F-93310 Le Pré Saint Gervais (FR)
(74) Mandataire: Cabinet Poncet
(86) Numéro de dépôt international: PCT/IB2010/055579
(87) Numéro de publication internationale: WO 2011/067739

(56) Documents cités:
- EP-A1- 0 707 835
- EP-A1- 2 106 767
- WO-A1-01/80766
- WO-A2-2004/073541
- US-A1- 2002 031 748
- US-A1- 2006 121 417
- US-A1- 2006 246 398
- US-A1- 2007 298 379

## Description

### DOMAINE TECHNIQUE DE L'INVENTION

La présente invention concerne le domaine des prothèses dentaires, et plus particulièrement un implant dentaire destiné à être inséré dans l'os maxillaire ou mandibulaire d'un patient. La présente invention concerne en outre une pièce de cicatrisation temporaire et un moignon dentaire définitif destinés à coopérer avec ledit implant dentaire.

Lors d'un remplacement d'une dent par une prothèse, il se pose souvent le problème de disposer d'un espace interdentaire suffisant pour l'insertion d'un implant dentaire entre deux dents. Ce problème d'espace se pose tout particulièrement dans le cas d'un remplacement des incisives mandibulaires ou latérales maxillaires, notamment en cas d'agénésie. Il faut donc disposer d'un implant dentaire de faible diamètre extérieur afin de pouvoir l'insérer et le visser entre deux dents.

La pièce prothétique dentaire est rapportée sur un appui prothétique à l'extrémité supérieure d'un moignon dentaire définitif connecté à l'implant dentaire. Les efforts de mastication pouvant aller jusqu'à environ 222 N au voisinage des incisives, il est nécessaire que la connexion entre le moignon dentaire définitif et l'implant dentaire soit très résistante.

Du fait des faibles dimensions extérieures de l'implant dentaire, une première solution consiste à prévoir un moignon dentaire définitif fabriqué d'une seule pièce avec l'implant dentaire. Ainsi, le document US 2006/0216673 décrit un implant dentaire destiné à être inséré dans la mâchoire d'un patient, s'étendant entre une extrémité distale et une extrémité proximale d'ancrage. L'implant dentaire est fabriqué d'une seule pièce avec un moignon dentaire définitif qui s'étend depuis et à l'écart de l'extrémité distale d'implant dentaire.

Avec ce type d'implant dentaire monobloc, il se pose un problème entre l'étape chirurgicale d'insertion de l'implant dentaire dans l'os de la mâchoire et l'étape de mise en place de la pièce prothétique dentaire sur l'appui prothétique fourni par le moignon dentaire. En effet, le temps entre ces deux étapes varie entre huit et douze semaines. Durant ce temps, l'implant dentaire ne doit pas être sollicité mécaniquement par des contraintes extérieures, à défaut de quoi on perturbe son ostéointégration dans l'os de la mâchoire. Or, le moignon dentaire dépasse au-dessus de la gencive : celui-ci ne peut pas être correctement protégé des aliments durant la mastication. Le dépassement du moignon dentaire rend impossible la mise en place d'une dent provisoire de protection (en plastique par exemple) s'accrochant sur les dents voisines par des pattes métalliques. Il en résulte que le moignon dentaire subit des efforts de mastication des aliments entre l'étape chirurgicale et l'étape de mise en place de la pièce prothétique dentaire. Ces efforts sont directement transmis à l'implant dentaire et nuisent à une bonne ostéointégration.

Afin de résoudre ce problème entre l'étape chirurgicale initiale et l'étape de mise en place de la pièce prothétique dentaire, on a imaginé un implant dentaire apte à coopérer avec un moignon dentaire définitif rapporté au moyen d'une connexion détachable, comme il est décrit dans le document EP 1 849 431.

Le document EP 1 849 431 décrit ainsi un implant dentaire destiné à être inséré dans la mâchoire d'un patient, s'étendant entre une extrémité distale de connexion et une extrémité proximale d'ancrage comprenant des moyens de réception pour la réception et la connexion détachable d'une pièce rapportée, telle qu'un moignon dentaire définitif, sur son extrémité distale de connexion.

Les moyens de réception comportent une cavité femelle à filetage interne. Le moignon dentaire définitif est ainsi rapporté et fixé par vissage.

L'implant dentaire et le moignon dentaire définitif étant en deux pièces, l'implant dentaire peut être inséré dans la mâchoire du patient sans dépassement au-dessus de la gencive et peut être protégé, par exemple par une dent provisoire de protection entre l'étape chirurgicale et l'étape de mise en place de la pièce prothétique. Le moignon dentaire définitif n'est fixé dans l'implant dentaire que lors de la mise en place de la pièce prothétique dentaire, après la période d'ostéointégration.

Le problème de ce type d'implant dentaire associé à un moignon dentaire rapporté est que les épaisseurs de matière autour de la cavité femelle à filetage interne et le diamètre de la vis destinée à y être insérée sont trop faibles pour supporter mécaniquement des charges occlusales de mastication élevées allant jusqu'à environ 222 N au voisinage des incisives, particulièrement lorsque l'implant dentaire comporte un diamètre extérieur maximal inférieur à 3 mm sur toute sa longueur. Il se produit parfois des ruptures prématurées de la vis de fixation et/ou de l'implant.

Les documents US 2006/0121417 et EP 2 106 767 décrivent des implants dentaires, aptes à coopérer avec un moignon dentaire définitif rapporté, dont le diamètre extérieur est trop important pour garantir une insertion entre deux dents dans le cas d'un remplacement des incisives mandibulaires ou latérales maxillaires, notamment en cas d'agénésie.

Il en est de même pour les implants dentaires des documents US 2006/0246398, EP 0707835, US 2007/0298379, US 2002/0031748, WO 2004/073541 et WO 01/80766 qui ont tous recours à la fixation d'un moignon dentaire définitif par une liaison vissée ou par une liaison à encliquetage.

### EXPOSE DE L'INVENTION

Un premier problème proposé par l'invention est de concevoir un implant dentaire à moignon dentaire définitif rapporté capable d'être implanté dans la mâchoire d'un patient pour le remplacement de dents avec un espace interdentaire très faible comme pour le remplacement des incisives mandibulaires et des incisives latérales maxillaires, notamment en cas d'agénésie.

Simultanément, la présente invention vise à concevoir un tel implant dentaire dont la connexion avec le moignon dentaire définitif rapporté est capable d'endurer des efforts de mastication élevés allant jusqu'à 222 N environ par exemple.

Pour atteindre ces buts ainsi que d'autres, l'invention propose un ensemble comprenant un implant dentaire ainsi qu'une pièce rapportée comme défini dans la revendication 1. Un tel emmanchement conique permet d'éviter un amincissement constant sur une grande hauteur de l'implant dentaire et limite efficacement les concentrations de contraintes qui sont le plus souvent à l'origine des ruptures de la liaison entre un moignon dentaire définitif et un implant dentaire du type de celui décrit dans le document EP 1 849 431.

L'emmanchement conique permet une liaison intime répartie de l'implant dentaire avec le moignon dentaire définitif. On obtient ainsi une participation du moignon dentaire définitif à la reprise d'une partie au moins des efforts de mastication.

De préférence, on peut prévoir que :
- l'implant dentaire est en un matériau biocompatible tel que du titane ou un alliage de titane,
- la cavité femelle d'emmanchement conique comporte une surface sensiblement tronconique à angle au sommet compris entre environ 1,5 degrés et environ 5 degrés, de préférence sensiblement égal à environ 3 degrés.

Un tel angle de cône est compatible avec les contraintes de hauteur et de largeur de l'implant dentaire pour procurer une liaison de résistance et de retenue suffisantes, particulièrement lorsque l'implant est en un matériau métallique biocompatible tel que du titane ou un alliage de titane.

De préférence, la cavité femelle d'emmanchement conique peut comporter une longueur comprise entre environ 4 mm et environ 5 mm. Une telle longueur de cône est compatible avec la longueur d'implant dentaire qui est limitée par la dimension en hauteur de l'os de la mâchoire du patient.

Avantageusement, l'implant dentaire peut comporter une longueur comprise entre environ 8 mm et environ 16 mm. Une telle longueur d'implant dentaire est compatible avec la plupart des hauteurs d'os de mâchoire.

De préférence, on peut prévoir que :
- l'implant dentaire est muni d'un filetage externe pour être inséré par vissage dans l'os maxillaire ou mandibulaire du patient,
- l'implant dentaire comporte une empreinte femelle de vissage disposée en prolongement de la cavité femelle d'emmanchement conique et accessible à travers la cavité femelle d'emmanchement conique.

L'effort de vissage est ainsi appliqué au plus près de l'extrémité proximale d'ancrage, c'est-à-dire au plus près de l'endroit où les contraintes de vissage sont les plus fortes. On évite ainsi d'induire dans l'implant dentaire des contraintes de torsion sur toute sa longueur. Dans le document EP 1 849 431, l'effort de vissage est appliqué au voisinage de l'extrémité distale de connexion de l'implant dentaire, ce qui induit des contraintes de torsion sur toute la longueur de l'implant, voire déforme l'implant sur sa longueur, et ce d'autant plus que l'implant dentaire est creux au voisinage de son extrémité distale de connexion.

Avantageusement, l'empreinte femelle de vissage peut comporter une section transversale à trois lobes. Une telle section transversale permet de communiquer à l'implant dentaire un couple de vissage élevé, pouvant atteindre les 110 N.cm environ.

Avantageusement, l'invention propose un deuxième ensemble comprenant un implant dentaire tel que décrit précédemment, et comprenant un moignon dentaire définitif s'étendant entre une extrémité inférieure et une extrémité supérieure destinée à supporter directement ou indirectement une pièce prothétique dentaire, comportant des premiers moyens de connexion pour être reçu et connecté de façon détachable sur l'extrémité distale de connexion de l'implant dentaire, lesdits premiers moyens de connexion étant constitués par une partie mâle d'emmanchement conique qui s'étend depuis l'extrémité inférieure du moignon dentaire définitif vers l'extrémité supérieure du moignon dentaire définitif en augmentant de diamètre extérieur.

L'extrémité inférieure du moignon dentaire définitif vient ainsi intimement combler la cavité femelle des moyens de réception de l'implant dentaire pour renforcer au mieux celui-ci et participer à sa résistance en assurant une reprise d'une partie au moins des efforts de mastication.

Avantageusement, la partie mâle d'emmanchement conique du moignon dentaire définitif peut comporter une surface sensiblement tronconique à angle au sommet égal à celui de la surface sensiblement tronconique de l'implant dentaire. On assure ainsi une liaison la plus intime possible entre le moignon dentaire définitif et l'implant dentaire avec une surface de contact la plus grande possible.

De préférence, le moignon dentaire définitif peut être en titane ou en un alliage de titane de même nature que celui constituant l'implant dentaire. Un tel contact par emmanchement conique entre deux pièces en titane ou en alliage de titane permet de ne pas dégrader la surface de l'une ou l'autre des pièces. En outre, il pourra se produire des phénomènes de microsoudure entre les deux pièces qui participent alors à la retenue du moignon dentaire définitif dans l'implant dentaire.

Avantageusement, le diamètre interne de la cavité femelle des moyens de réception et le diamètre externe de la partie mâle des premiers moyens de connexion sont tels que, lorsque le moignon dentaire définitif est engagé dans l'implant dentaire, l'emmanchement conique se fait selon une surface sensiblement tronconique de longueur comprise entre environ 3,5 mm et environ 4,4 mm. Une telle longueur d'emmanchement conique procure une surface de frottement et de contact entre le moignon dentaire définitif et l'implant dentaire de dimensions suffisantes pour assurer une retenue satisfaisante du moignon dentaire définitif, notamment lorsque le moignon dentaire définitif et l'implant dentaire sont en titane ou en alliage de titane.

De préférence, l'invention propose un premier ensemble comprenant un implant dentaire tel que précédemment décrit, et dans lequel on prévoit que :
- l'implant dentaire est associé à une pièce de cicatrisation temporaire, s'étendant entre une extrémité inférieure et une extrémité supérieure, comportant des seconds moyens de connexion pour être reçue et connectée de façon détachable sur l'extrémité distale de connexion de l'implant dentaire,
- les seconds moyens de connexion de la pièce de cicatrisation temporaire sont constitués par une partie mâle d'emmanchement conique qui s'étend depuis l'extrémité inférieure de la pièce de cicatrisation vers l'extrémité supérieure de la pièce de cicatrisation en augmentant de diamètre extérieur,
- la pièce de cicatrisation temporaire est en un matériau biocompatible non métallique.

La pièce de cicatrisation permet d'obturer la cavité femelle d'emmanchement conique entre l'étape chirurgicale initiale et l'étape de mise en place de la pièce prothétique dentaire, afin d'éviter de polluer la cavité femelle par la présence d'aliments ou de résidus de sang, d'os ou de chair. La pièce de cicatrisation étant en matériau non métallique, on évite la création de microsoudures avec l'implant dentaire (lorsque celui-ci est métallique) ce qui limite le risque d'une trop grande résistance lors du retrait de la pièce de cicatrisation hors de l'implant dentaire afin de ne pas détériorer l'ostéointégration.

Avantageusement, on peut prévoir que :
- l'implant dentaire est en un matériau biocompatible métallique tel que du titane ou un alliage de titane,
- la pièce de cicatrisation est en polyétheréthercétone.

Le polyétheréthercétone, également appelé PEEK, n'est pas susceptible de détériorer la cavité femelle de l'implant dentaire en matériau métallique, mais présente avec les matériaux métalliques un coefficient de frottement suffisant pour assurer une liaison conique à retenue satisfaisante pendant la période d'ostéointégration, et ce tout en autorisant un retrait ultérieur par un effort non susceptible de dégrader l'ostéointégration de l'implant dentaire.

Avantageusement, on peut prévoir que le diamètre interne de la cavité femelle des moyens de réception et le diamètre externe de la partie mâle des seconds moyens de connexion sont tels que, lorsque la pièce de cicatrisation temporaire est engagée dans l'implant dentaire, l'emmanchement conique se fait selon une surface sensiblement tronconique de longueur comprise entre environ 2 mm et environ 3,5 mm.

Une telle longueur d'emmanchement conique procure une surface de dimension convenable pour une retenue satisfaisante de la pièce de cicatrisation dans l'implant dentaire.

De préférence, l'extrémité supérieure de la pièce de cicatrisation temporaire peut comporter des troisièmes moyens de connexion à un outil d'extraction. L'outil d'extraction peut par exemple être un davier, outil qui est d'usage courant dans le domaine dentaire.

Avantageusement, on peut prévoir que, lorsque la pièce de cicatrisation temporaire est engagée dans l'implant dentaire, l'extrémité supérieure de la pièce de cicatrisation temporaire dépasse au-dessus de l'extrémité distale de connexion de l'implant dentaire selon une longueur comprise entre environ 2,5 mm et environ 6 mm.

Un tel dépassement de la pièce de cicatrisation au-dessus de l'extrémité distale de connexion de l'implant dentaire permet la mise en place, au-dessus de la pièce de cicatrisation, de moyens de protection tels qu'une dent provisoire en matière plastique s'accrochant sur les dents voisines par des pattes métalliques. Et ce dépassement permet tout de même une préhension par un outil d'extraction pour le retrait de la pièce de cicatrisation.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue de côté en coupe d'un implant dentaire selon un mode de réalisation de l'invention ;
- la figure 2 est une vue de côté de l'implant dentaire de la figure 1 ;
- la figure 3 est une vue de dessus de l'implant dentaire des figures 1 et 2 ;
- les figures 4 à 6 sont des vues de côté de moignons dentaires définitifs adaptés pour être associés avec l'implant dentaire des figures 1 à 3 pour former des deuxièmes ensembles ;
- la figure 7 est une vue de côté d'une pièce de cicatrisation adaptée pour être associée avec l'implant dentaire des figures 1 à 3 pour former un premier ensemble ;
- la figure 8 est une vue de côté en coupe d'un premier ensemble comportant un implant dentaire des figures 1 à 3 associé avec la pièce de cicatrisation de la figure 7 ; et
- la figure 9 est une vue de côté en coupe d'un deuxième ensemble comportant un implant dentaire des figures 1 à 3 associé au moignon dentaire définitif de la figure 4.

### DESCRIPTION DES MODES DE REALISATION PREFERES

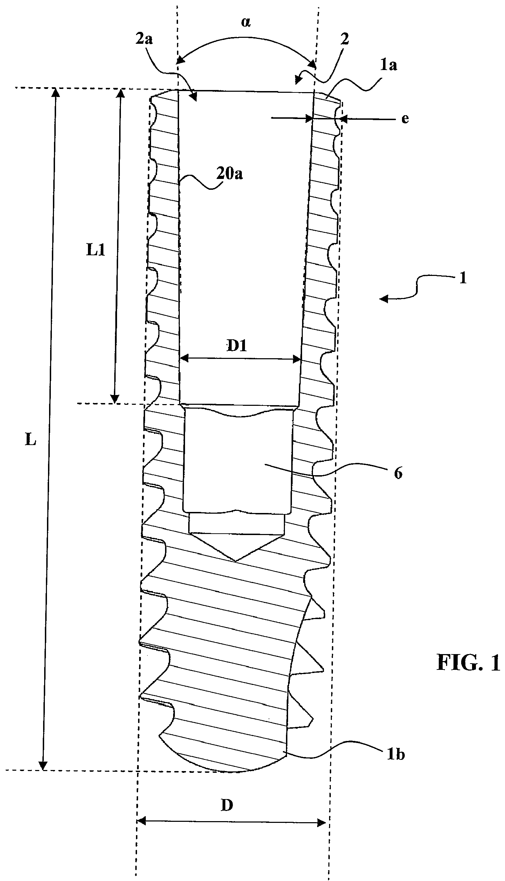

Un mode de réalisation de l'implant dentaire 1 selon l'invention est plus particulièrement représenté sur les figures 1 à 3.

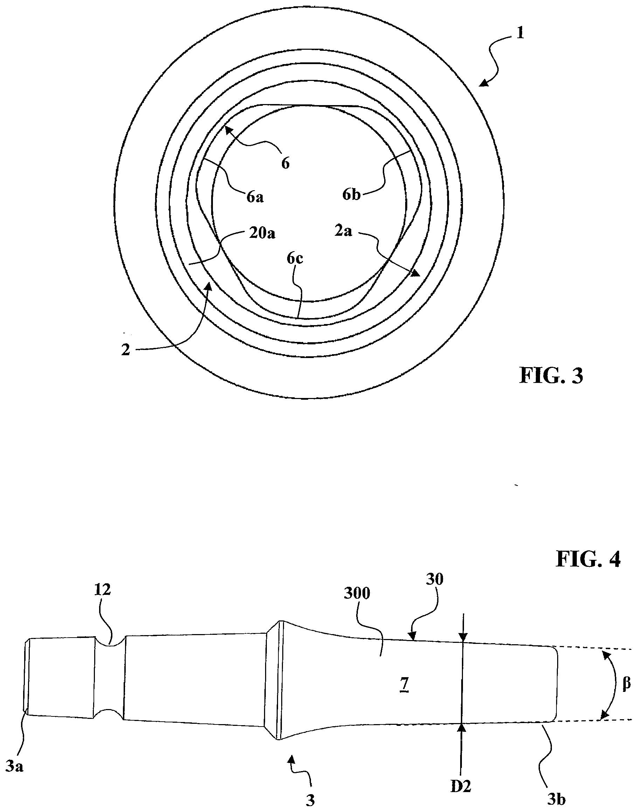

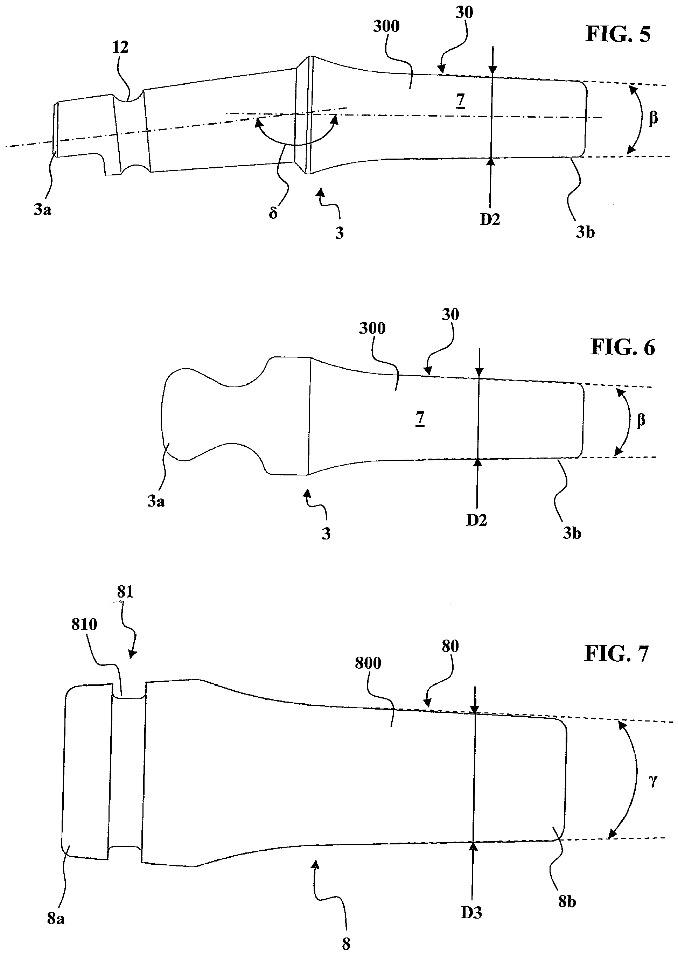

On voit plus particulièrement sur la figure 1 que l'implant dentaire 1 s'étend entre une extrémité distale de connexion 1a et une extrémité proximale d'ancrage 1b. L'implant dentaire 1 comporte des moyens de réception 2 pour la réception et la connexion détachable d'une pièce rapportée, telle qu'un moignon dentaire définitif 3 (figures 4 à 6) ou une pièce de cicatrisation 8 (figure 7), sur son extrémité distale de connexion 1a.

L'implant dentaire 1 comporte un diamètre extérieur maximal D inférieur à 3 mm sur toute sa longueur L.

De préférence, on peut prévoir que le diamètre extérieur maximal D est inférieur ou égal à 2,8 mm environ. De telles dimensions permettent une utilisation de l'implant dentaire 1 pour le remplacement de dents avec un très faible espacement interdentaire, comme c'est par exemple le cas pour les incisives mandibulaires et les incisives latérales maxillaires, notamment en cas d'agénésie.

Les moyens de réception 2 sont constitués par une cavité femelle 2a d'emmanchement conique s'étendant depuis l'extrémité distale de connexion 1a vers l'extrémité proximale d'ancrage 1b en diminuant de diamètre intérieur D1.

L'implant dentaire 1 est en un matériau biocompatible tel que du titane ou un alliage de titane par exemple. La cavité femelle 2a d'emmanchement conique comporte une surface sensiblement tronconique 20a à angle au sommet α compris entre environ 1,5 degrés et environ 5 degrés. De préférence, l'angle au sommet α pourra être sensiblement égal à 3 degrés environ.

La cavité femelle 2a d'emmanchement conique comporte une longueur L1 comprise entre environ 4 mm et environ 5 mm. L'implant dentaire 1 comporte quant à lui une longueur L comprise entre environ 8 mm et environ 16 mm.

Un angle au sommet α d'environ 3 degrés apparaît comme un bon compromis afin de disposer d'une longueur L1 suffisante pour un emmanchement conique à retenue satisfaisante tout en maintenant une épaisseur e de paroi d'implant dentaire 1 au voisinage de l'extrémité distale de connexion 1a suffisante pour procurer à l'implant dentaire 1 une bonne résistance mécanique.

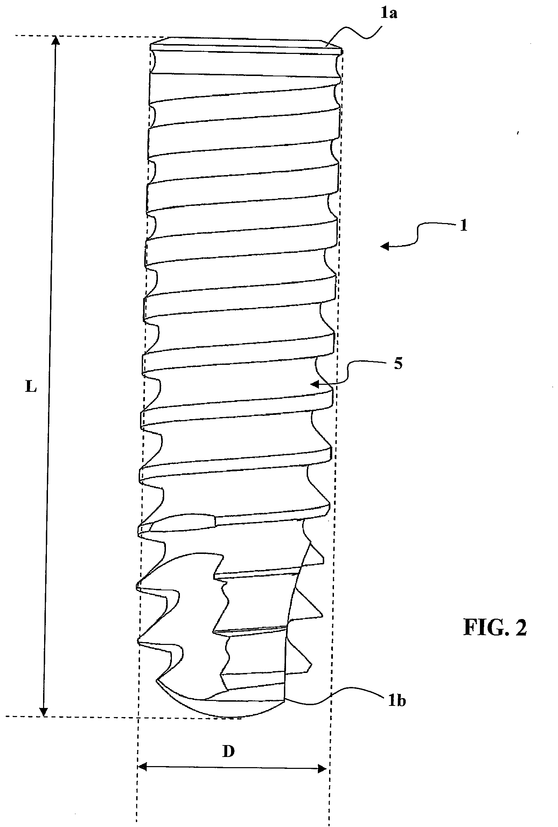

On voit plus particulièrement sur la figure 2 que l'implant dentaire 1 est muni d'un filetage externe 5 pour être inséré par vissage dans l'os maxillaire ou mandibulaire du patient. Pour permettre ce vissage, l'implant dentaire 1 comporte une empreinte femelle de vissage 6 plus particulièrement visible sur les figures 1 et 3.

L'empreinte femelle de vissage 6 est disposée en prolongement de la cavité femelle 2a d'emmanchement conique, et est accessible à travers la cavité femelle 2a d'emmanchement conique. L'empreinte femelle de vissage 6 est ainsi disposée au plus près de l'extrémité proximale d'ancrage 1b de l'implant dentaire 1 pour communiquer directement l'effort de vissage à celle-ci. On voit plus particulièrement sur la figure 3 que l'empreinte femelle de vissage 6 comporte une section transversale à trois lobes 6a, 6b et 6c.

L'implant dentaire des figures 1 à 3 est destiné à former un deuxième ensemble 200, en étant associé à l'un des moignons dentaires définitifs 3 représentés sur les figures 4 à 6. Ces moignons dentaires définitifs 3 s'étendent entre une extrémité inférieure 3b et une extrémité supérieure 3a destinée à supporter directement ou indirectement une pièce prothétique dentaire. La fonction du moignon dentaire définitif est de fournir une émergence mécanique au-dessus de la gencive du patient pour la réception et la fixation, directement ou indirectement, de la pièce prothétique. Le moignon dentaire définitif 3 est ainsi parfois appelé pilier trans-muqueux.

Les moignons dentaires définitifs 3 comportent des premiers moyens de connexion 30 pour être reçus et connectés de façon détachable sur l'extrémité distale de connexion 1a de l'implant dentaire 1. En l'espèce, les premiers moyens de connexion 30 comportent une partie mâle d'emmanchement conique 300 qui s'étend depuis l'extrémité inférieure 3b vers l'extrémité supérieure 3a en augmentant de diamètre extérieur D2. La partie mâle d'emmanchement conique 300 du moignon dentaire définitif 3 comporte une surface sensiblement tronconique 7 à angle au sommet β sensiblement égal à l'angle au sommet α de la surface sensiblement tronconique 20a de l'implant dentaire 1. L'assemblage de l'implant dentaire 1 et du moignon dentaire définitif 3 se fait ainsi strictement par une liaison conique. Aucune liaison vissée n'est utilisée.

Avantageusement, le moignon dentaire définitif 3 est en titane ou en alliage de titane de même nature que celui constituant l'implant dentaire 1.

Sur la figure 7 est représentée, à plus grande échelle, une pièce de cicatrisation temporaire 8 destinée à former un premier ensemble 100 en étant associée avec l'implant dentaire 1 pendant la période d'ostéointégration. La pièce de cicatrisation temporaire 8 s'étend entre une extrémité inférieure 8b et une extrémité supérieure 8a. La pièce de cicatrisation temporaire 8 comporte des seconds moyens de connexion 80 pour être reçue et connectée de façon détachable sur l'extrémité distale de connexion 1a de l'implant dentaire 1. Les seconds moyens de connexion 80 comportent une partie mâle d'emmanchement conique 800 qui s'étend depuis l'extrémité inférieure 8b vers l'extrémité supérieure 8a en augmentant de diamètre extérieur D3. La partie mâle d'emmanchement conique 800 a un angle au sommet γ qui est sensiblement égal à l'angle au sommet α. L'assemblage de l'implant dentaire 1 et de la pièce de cicatrisation temporaire 8 se fait ainsi exclusivement par une liaison conique. Aucune liaison vissée n'est utilisée.

La pièce de cicatrisation temporaire 8 est en un matériau biocompatible non métallique, par exemple en matière plastique telle que du polyétheréthercétone (PEEK).

L'extrémité supérieure 8a de la pièce de cicatrisation temporaire 8 est munie de troisièmes moyens de connexion 81. Les troisièmes moyens de connexion 81 sont conformés pour permettre une préhension de la pièce de cicatrisation temporaire 8 par un outil d'extraction (non représenté) tel qu'un davier par exemple. En l'espèce, les moyens de connexion 81 comportent une gorge annulaire extérieure 810.

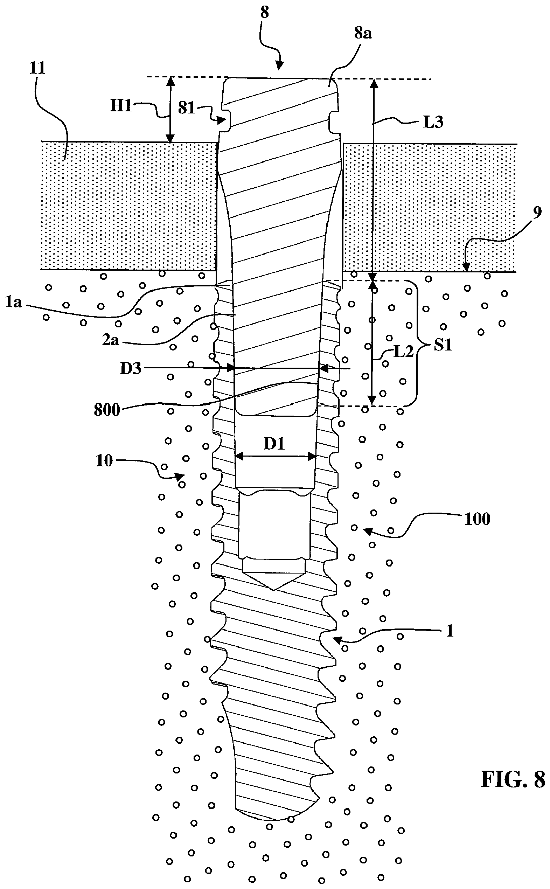

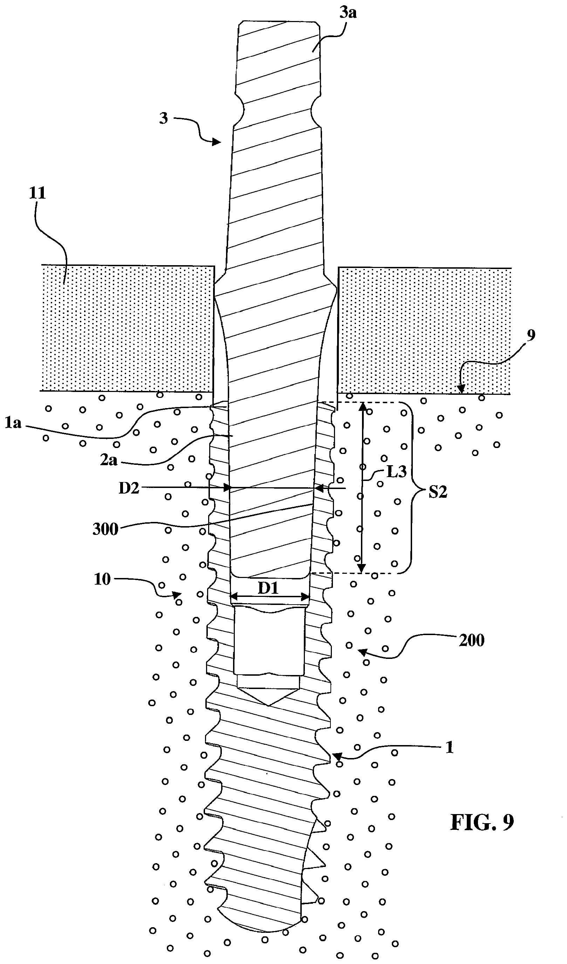

Le remplacement d'une dent d'un patient par une prothèse dentaire s'effectue en deux étapes distinctes illustrées au moyen des figures 8 et 9. Sur ces figures, aucune dent adjacente n'est représentée, pour faciliter la compréhension du lecteur.

La première étape, dite chirurgicale, consiste à visser l'implant dentaire 1 dans l'os maxillaire ou mandibulaire du patient. Lors de ce vissage, l'implant dentaire 1 est inséré jusqu'à ce que son extrémité distale de connexion 1a soit située légèrement en dessous de la surface supérieure 9 de l'os 10 (figure 8).

Il s'ensuit alors une période de cicatrisation et d'ostéointégration qui dure de huit à douze semaines et pendant laquelle se produit l'ostéointégration de l'implant dentaire 1 dans l'os 10 de la mâchoire.

Durant cette période d'ostéointégration, un premier ensemble 100 est formé par l'association d'un implant dentaire 1 avec une pièce de cicatrisation temporaire 8 par emmanchement de la partie mâle d'emmanchement conique 800 dans la cavité femelle 2a d'emmanchement conique. Le diamètre intérieur D1 de la cavité femelle 2a des moyens de réception 2 et le diamètre externe D3 de la partie mâle 800 des seconds moyens de connexion 80 sont tels que, lorsque la pièce de cicatrisation temporaire 8 est engagée dans l'implant dentaire 1, l'emmanchement conique se fait selon une surface sensiblement tronconique S1 de longueur L2 comprise entre environ 2 mm et environ 3,5 mm. Une telle longueur L2 permet une retenue suffisante de la pièce de cicatrisation 8 pendant l'étape de cicatrisation, tout en autorisant un retrait de celle-ci par l'application d'une force non susceptible de détériorer l'ostéointégration de l'implant dentaire 1.

Pendant la période de cicatrisation, il est important que l'extrémité supérieure 8a de la pièce de cicatrisation ne dépasse au-dessus de la gencive 11 que selon une faible hauteur H1 d'environ 1 mm. Une telle hauteur H1 permet une préhension de la pièce de cicatrisation temporaire 8 par un outil d'extraction tel qu'un davier grâce aux troisièmes moyens de connexion 81 tout en évitant un trop fort dépassement au-dessus de la gencive 11 qui risquerait d'exposer l'implant dentaire 1 aux efforts de mastication ou empêcherait la protection de la pièce de cicatrisation temporaire 8 par une pièce de protection, telle qu'une dent provisoire accrochée sur les dents voisines par des pattes métalliques par exemple.

Pour ce faire, on peut prévoir que, lorsque la pièce de cicatrisation temporaire 8 est engagée dans l'implant dentaire 1, l'extrémité supérieure 8a de la pièce de cicatrisation temporaire 8 dépasse au-dessus de l'extrémité distale de connexion 1a de l'implant dentaire 1 selon une longueur L3 comprise entre environ 2,5 mm et environ 6 mm.

Une fois la période de cicatrisation terminée, la pièce de cicatrisation temporaire 8 est retirée au moyen d'un outil d'extraction tel qu'un davier s'engageant dans les troisièmes moyens de connexion 81.

Un deuxième ensemble 200 est alors formé par l'association de l'implant dentaire 1 avec un moignon dentaire définitif 3 par emmanchement de la partie mâle d'emmanchement conique 300 dans la cavité femelle 2a d'emmanchement conique (figure 9). Le diamètre intérieur D1 de la cavité femelle 2a des moyens de réception 2 et le diamètre extérieur D2 de la partie mâle 300 des premiers moyens de connexion 30 sont tels que, lorsque le moignon dentaire définitif 3 est engagé dans l'implant dentaire 1, l'emmanchement conique se fait selon une surface S2 sensiblement tronconique, de longueur L3 comprise entre environ 3,5 mm et environ 4,4 mm.

Une telle longueur L3 permet d'assurer une retenue suffisante du moignon dentaire définitif 3 dans l'implant dentaire 1, notamment lorsque ceux-ci sont en matière métallique. Une telle longueur L3 s'est notamment avérée particulièrement satisfaisante dans le cas d'un moignon dentaire définitif 3 et d'un implant dentaire 1 en titane ou en alliage de titane du fait du coefficient de frottement mutuel entre ces matières.

Lorsque le moignon dentaire définitif 3 est emmanché coniquement dans l'implant dentaire 1, ceux-ci sont intimement liés de sorte que le deuxième ensemble 200 ainsi constitué est capable de résister à des efforts dynamiques de mastication d'environ 222 N, voire jusqu'à 265 N, malgré la faible dimension extérieure du deuxième ensemble 200, l'implant dentaire 1 comportant un diamètre extérieur maximal D inférieur à 3 mm sur toute sa longueur L.

Lorsque l'implant dentaire 1 et le moignon dentaire définitif 3 sont en matière métallique, il peut en outre se produire des phénomènes de microsoudure qui tendent à renforcer la liaison entre l'implant dentaire 1 et le moignon dentaire définitif 3.

### Exemple

Un implant dentaire 1 selon l'invention a été réalisé avec les paramètres suivants :
- L = 14 mm
- D = 2,8 mm
- α = β = 3°
- L1 = 4,6 mm
- L3 = 4 mm
- matériau : T60 (titane non allié).

Trois exemplaires de cet implant dentaire 1, équipés chacun d'un moignon dentaire définitif 3, ont été soumis à des cycles répétitifs d'application d'un effort dynamique de 265 N selon la norme ISO 14801. Ces implants dentaires 1 n'ont été rompus qu'après plus de 2 700 000 cycles. D'excellents résultats ont également été obtenus avec du titane allié, comme le TA6V par exemple.

Les mêmes cycles ont été appliqués dans les mêmes conditions à des exemplaires d'un implant « OsseoSpeed ® 3.0 S », commercialisé par la société ASTRA TECH FRANCE, qui est en titane T60 et présente un diamètre extérieur maximal de 3 mm. La connexion entre le moignon dentaire définitif et l'implant dentaire est assurée par une liaison vissée. La liaison vissée a été rompue après 225 cycles environ.

Différentes formes de moignon dentaire définitif peuvent être utilisées, comme illustré sur les figures 4 à 6. Sur les figures 4 et 6, le moignon dentaire définitif 3 est un moignon droit, tandis que le moignon dentaire définitif 3 de la figure 5 est un moignon dit angulé, l'extrémité inférieure 3b et l'extrémité supérieure 3a présentant entre elles un angle δ différent de 180°. Les moyens pour la réception, directe ou indirecte, d'une pièce prothétique peuvent également différer. Sur les figures 4 et 5, les moyens de réception comportent une gorge annulaire périphérique 12 ainsi qu'une extrémité supérieure 3a à section non circulaire pour une indexation en rotation de la pièce prothétique dentaire. Sur la figure 6, les moyens de réception de la pièce prothétique dentaire consistent en une extrémité supérieure 3a sensiblement en forme de boule sur laquelle vient s'encliqueter la pièce prothétique.

La présente invention n'est pas limitée aux modes de réalisation qui ont été explicitement décrits, mais elle en inclut les diverses variantes et généralisations contenues dans le domaine des revendications ci-après.

## Revendications

1. - Ensemble (100, 200) comprenant :
- un implant dentaire (1) destiné à être inséré dans l'os maxillaire ou mandibulaire d'un patient, s'étendant entre une extrémité distale de connexion (1a) et une extrémité proximale d'ancrage (1b), comportant des moyens de réception (2) pour la réception et la connexion détachable d'une pièce rapportée de type moignon dentaire définitif (3) ou pièce de cicatrisation (8), sur son extrémité distale de connexion (1a), lesdits moyens de réception (2) comprenant une cavité femelle (2a) d'emmanchement conique s'étendant depuis l'extrémité distale de connexion (1a) vers l'extrémité proximale d'ancrage (1b) en diminuant de diamètre intérieur (D1),
- une pièce rapportée, de type moignon dentaire définitif (3) destinée à supporter directement ou indirectement une pièce prothétique dentaire, ou de type pièce de cicatrisation (8) en un matériau biocompatible non métallique, s'étendant entre une extrémité inférieure (3b, 8b) et une extrémité supérieure (3a, 8a), comportant des moyens de connexion (30, 80) pour être reçue et connectée de façon détachable sur l'extrémité distale de connexion (1a) de l'implant dentaire (1),
- ledit implant dentaire (1) comportant un diamètre extérieur maximal (D) inférieur à 3 mm sur toute sa longueur (L), **caractérisé en ce que**:
- lesdits moyens de connexion (30, 80) sont constitués par une partie mâle d'emmanchement conique (300, 800) qui s'étend depuis l'extrémité inférieure (3b, 8b) du moignon dentaire définitif (3) ou de la pièce de cicatrisation (8) vers l'extrémité supérieure (3a, 8a) du moignon dentaire définitif (3) ou de la pièce de cicatrisation (8) en augmentant de diamètre extérieur (D2, D3),
- l'assemblage de l'implant dentaire (1) et de la pièce rapportée (3, 8) se fait exclusivement par un emmanchement de la partie mâle d'emmanchement conique (300, 800) dans la cavité femelle (2a) d'emmanchement conique.

2. - Ensemble (100, 200) selon la revendication 1, **caractérisé en ce que** :
- l'implant dentaire (1) est en un matériau biocompatible tel que du titane ou un alliage de titane,
- la cavité femelle (2a) d'emmanchement conique comporte une surface sensiblement tronconique (20a) à angle au sommet (α) compris entre environ 1,5 degrés et environ 5 degrés, de préférence sensiblement égal à environ 3 degrés.

3. - Ensemble (100, 200) selon la revendication 2, **caractérisé en ce que** la cavité femelle (2a) d'emmanchement conique comporte une longueur (L1) comprise entre environ 4 mm et environ 5 mm.

4. - Ensemble (100, 200) selon l'une quelconque des revendications 1 à 3, **caractérisé en ce qu'**il comporte une longueur (L) comprise entre environ 8 mm et environ 16 mm.

5. - Ensemble (100, 200) selon l'une quelconque des revendications 1 à 4, **caractérisé en ce que** :
- l'implant dentaire (1) est muni d'un filetage externe (5) pour être inséré par vissage dans l'os maxillaire ou mandibulaire du patient,
- l'implant dentaire (1) comporte une empreinte femelle de vissage (6) disposée en prolongement de la cavité femelle (2a) d'emmanchement conique et accessible à travers la cavité femelle (2a) d'emmanchement conique.

6. - Ensemble (100, 200) selon la revendication 5, **caractérisé en ce que** l'empreinte femelle de vissage (6) comporte une section transversale à trois lobes (6a, 6b, 6c).

7. - Ensemble (200) selon l'une quelconque des revendications 1 à 6, **caractérisé en ce que** la partie mâle d'emmanchement conique (300) du moignon dentaire définitif (3) comporte une surface sensiblement tronconique (7) à angle au sommet (β) égal à celui de la cavité femelle (2a) d'emmanchement conique de l'implant dentaire (1).

8. - Ensemble (200) selon l'une quelconque des revendications 1 à 7, **caractérisé en ce que** le moignon dentaire définitif (3) est en titane ou en un alliage de titane de même nature que celui constituant l'implant dentaire (1).

9. - Ensemble (200) selon l'une quelconque des revendications 1 à 8, **caractérisé en ce que** le diamètre interne (D1) de la cavité femelle (2a) des moyens de réception (2) et le diamètre externe (D2) de la partie mâle (300) des premiers moyens de connexion (30) sont tels que, lorsque le moignon dentaire définitif (3) est engagé dans l'implant dentaire (1), l'emmanchement conique se fait selon une surface (S2) sensiblement tronconique de longueur (L3) comprise entre environ 3,5 mm et environ 4,4 mm.

10. - Ensemble (100) selon l'une quelconque des revendications 1 à 9, **caractérisé en ce que** :
- l'implant dentaire (1) est en un matériau biocompatible métallique tel que du titane ou un alliage de titane,
- la pièce de cicatrisation (8) est en polyétheréthercétone.

11. - Ensemble (100) selon l'une quelconque des revendications 1 à 10, **caractérisé en ce que** le diamètre interne (D1) de la cavité femelle (2a) des moyens de réception (2) et le diamètre externe (D3) de la partie mâle (800) des seconds moyens de connexion (80) sont tels que, lorsque la pièce de cicatrisation (8) temporaire est engagée dans l'implant dentaire (1), l'emmanchement conique se fait selon une surface sensiblement tronconique (S1) de longueur (L2) comprise entre environ 2 mm et environ 3,5 mm.

12. - Ensemble (100) selon l'une quelconque des revendications 1 à 11, **caractérisé en ce que** l'extrémité supérieure (8a) de la pièce de cicatrisation temporaire (8) comporte des troisièmes moyens de connexion (81) à un outil d'extraction.

13. - Ensemble (100) selon l'une quelconque des revendications 1 à 12, **caractérisé en ce que**, lorsque la pièce de cicatrisation temporaire (8) est engagée dans l'implant dentaire (1), l'extrémité supérieure (8a) de la pièce de cicatrisation temporaire (8) dépasse au-dessus de l'extrémité distale de connexion (1a) de l'implant dentaire (1) selon une longueur (L3) comprise entre environ 2,5 mm et environ 6 mm.

## Patentansprüche

1. - Zusammensetzung (100, 200) umfassend:
- ein Dentalimplantat (1) zum Einsetzen in einen Oberkiefer- oder Unterkieferknochen eines Patienten, das sich zwischen einem distalen Verbindungsende (1a) und einem proximalen Verankerungsende (1b) erstreckt, umfassend Aufnahmemittel (2) zur Aufnahme und lösbaren Anbindung eines Einbauteils nach Art eines Zahnendstummels (3) oder eines Wundheilungsstückes (8), auf seinem distalen Verbindungsende (1a), wobei die genannten Aufnahmemittel (2) eine konische weibliche Ausnehmung (2a) zur Einpassung umfassen, die sich vom distalen Verbindungsende (1a) bis zur proximalen Verankerungsstelle (1b) mit abnehmenden Innendurchmesser (D1) erstrecken,
- ein Einbauteil nach Art eines Zahnendstummels (3) zum direkten oder indirekten Tragen eines dentalen Prothesenstückes oder nach Art eines Wundheilungsstückes (8) aus einem nicht-metallischen biokompatiblen Material, das sich zwischen einem unteren Ende (3b, 8b) und einem oberen Ende (3a, 8a) erstreckt, umfassend Anbindemittel (30, 80) zum lösbaren Aufnehmen und Verbinden des Dentalimplantates (1) auf dem distalen Verbindungsende (1a),
- wobei das genannte Dentalimplantat (1) einen maximalen Außendurchmesser (D) von kleiner als 3 mm über seine gesamte Länge (L) umfasst,
**dadurch gekennzeichnet, dass** :
- die genannten Anbindemittel (30, 80) durch ein konisches männliches Einpassungsstück (300, 800) gebildet sind, die sich vom unteren Ende (3b, 8b) des Zahnendstummels (3) oder des Wundheilungsstückes (8) zum oberen Ende (3a, 8a) des Zahnendstummels (3) oder des Wundheilungsstückes (8) mit ansteigendem Außendurchmesser (D2, D3) erstrecken,
- ein Verbund des Dentalimplantats (1) und des Einbauteils (3, 8) sich ausschließlich aus dem Eingriff des konischen männlichen Einpassungsstückes (300, 800) in die konische weibliche Ausnehmung (2a) zur Einpassung bildet.

2. - Zusammensetzung (100, 200) nach Anspruch 1, **dadurch gekennzeichnet, dass**:
- das Dentalimplantat (1) ein biokompatibles Material ist, wie zum Beispiel Titan oder eine Titanlegierung,
- die konische weibliche Ausnehmung (2a) zur Einpassung eine im Wesentlichen kegelförmige Oberfläche (20a) mit einem Öffnungswinkel (α) umfasst, der zwischen ungefähr 1,5 Grad und ungefähr 5 Grad, vorzugsweise im Wesentlichen gleich ungefähr 3 Grad umfasst.

3. - Zusammensetzung (100, 200) nach Anspruch 2, **dadurch gekennzeichnet, dass** die konische weibliche Ausnehmung (2a) eine Länge (L1) umfasst, die zwischen ungefähr 4 mm und ungefähr 5 mm umfasst.

4. - Zusammensetzung (100, 200) nach einem der Ansprüche 1 bis 3, **dadurch gekennzeichnet, dass** sie eine Länge (L) zwischen ungefähr 8 mm und ungefähr 16 mm umfasst.

5. - Zusammensetzung (100, 200) nach einem der Ansprüche 1 bis 4, **dadurch gekennzeichnet, dass**:
- das Dentalimplantat (1) mit einem Außengewinde (5) ausgestattet ist, um durch Einschrauben in den Oberkiefer- oder Unterkieferknochen des Patienten eingesetzt zu werden,
- das Dentalimplantat (1) ein eingeprägtes weibliches Gewinde (6) umfasst, das in Verlängerung zur konischen weiblichen Ausnehmung (2a) zur Einpassung angeordnet und über die konische weibliche Ausnehmung (2a) zur Einpassung zugänglich ist.

6. - Zusammensetzung (100, 200) nach Anspruch 5, **dadurch gekennzeichnet, dass** das eingeprägte weibliche Gewinde (6) einen Querschnitt mit drei Lappen (6a, 6b, 6c) umfasst.

7. - Zusammensetzung (200) nach einem der Ansprüche 1 bis 6, **dadurch gekennzeichnet, dass** das konische männliche Einpassungsstück (300) des Zahnendstummels (3) eine im Wesentlichen kegelförmige Oberfläche (7) mit einem Öffnungswinkel (β) umfasst, der gleich dem der konischen weiblichen Ausnehmung (2a) zur Einpassung des Dentalimplantates (1) ist.

8. - Zusammensetzung (200) nach einem der Ansprüche 1 bis 7, **dadurch gekennzeichnet, dass** der Zahnendstummel (3) aus Titan oder einer Titanlegierung der gleichen Art ist, wie sie das Dentalimplantat (1) bildet.

9. - Zusammensetzung (200) nach einem der Ansprüche 1 bis 8, **dadurch gekennzeichnet, dass** der innere Durchmesser (D1) der weiblichen Ausnehmung (2a) der Aufnahmemittel (2) und der äußere Durchmesser (D2) des männlichen Einpassungsstückes (300) der ersten Anbindemittel (30) derart sind, dass wenn der Zahnendstummel (3) in das Dentalimplantat (1) eingreift, die konische Einpassung sich über eine Oberfläche (S2) bildet, die sich im Wesentlichen entlang einer kegelförmigen Länge (L3) bildet, die zwischen ungefähr 3,5 mm und ungefähr 4,4 mm umfasst.

10. - Zusammensetzung (100) nach einem der Ansprüche 1 bis 9, **dadurch gekennzeichnet, dass**:
- das Dentalimplantat (1) ein metallisches biokompatibles Material, wie zum Beispiel Titan oder eine Titanlegierung ist,
- das Wundheilungsstück (8) aus Polyetheretherketon ist.

11. - Zusammensetzung (100) nach einem der vorstehenden Ansprüche 1 bis 10, **dadurch gekennzeichnet, dass** der innere Durchmesser (D1) der weiblichen Ausnehmung (2a) der Aufnahmemittel (2) und der äußere Durchmesser (D3) des männlichen Einpassungsstückes (800) der zweiten Anbindemittel (80) derart sind, dass wenn das temporäre Wundheilungsstück (8) in das Dentalimplantat (1) eingesetzt ist, sich die konische Einpassung über einer im Wesentlichen kegelförmigen Oberfläche (S1) ergibt, dessen Länge (L2) zwischen ungefähr 2 mm und ungefähr 3,5 mm umfasst.

12. - Zusammensetzung (100) nach einem der vorstehenden Ansprüche 1 bis 11, **dadurch gekennzeichnet, dass** das obere Ende (8a) des temporären Wundheilungsstückes (8) dritte Anbindemittel (81) für ein Lösewerkzeug umfasst.

13. - Zusammensetzung (100) nach einem der vorstehenden Ansprüche 1 bis 12, **dadurch gekennzeichnet, dass** wenn das temporäre Wundheilungsstück (8) in das Dentalimplantat (1) eingesetzt ist, das obere Ende (8a) des temporären Wundheilungsstückes (8) über das distale Verbindungsende (1a) des Dentalimplantates (1) über eine Länge (L3) überragt, die zwischen ungefähr 2,5 mm und ungefähr 6 mm umfasst.

## Claims

1. Assembly (100, 200) comprising :
- a dental implant (1) intended to be inserted into the maxillary or mandibular bone of a patient, extending between a distal connection end (1a) and a proximal anchoring end (1b), comprising receiving means (2) for the reception and releasable connection of an attached component of the type of final abutment (3) or cicatrization component (8), on its distal connection end (1a), said receiving means (2) having a conically tapered female cavity (2a), extending from the distal connection end (1a) toward the proximal anchoring end (1b) with decreasing internal diameter (D1),
- an attached component, such as a final abutment (3) intended to directly or indirectly support a tooth prosthesis, or such as a cicatrization component (8) made of a non-metallic biocompatible material, extending between a lower end (3b, 8b) and an upper end (3a, 8a), comprising connection means (30, 80) in order to be received and connected releasably on the distal connection end (1a) of the dental implant (1),
- said dental implant (1) having a maximum external diameter (D) of less than 3 mm along the entire length (L) thereof,
**characterized in that** :
- said connection means (30, 80) being formed by a conically tapered male fitting part (300, 800) which extends from the lower end (3b, 8b) of the final abutment (3) or from the cicatrization component (8) toward the upper end (3a, 8a) of the final abutment (3) or the cicatrization component (8) with increasing external diameter (D2, D3),
- the assembly of the dental implant (1) and of the attached component (3, 8) is made exclusively by fitting the conically tapered male fitting part (300, 800) into the conically tapered female fitting cavity (2a) by a conical connection.

2. Assembly (100, 200) as claimed in claim 1, **characterized in that**:
- the dental implant (1) is made of a biocompatible material such as titanium or a titanium alloy,
- the conically tapered female fitting cavity (2a) has a substantially frustoconical surface (20a) with an apex angle (α) of between approximately 1.5 degrees and approximately 5 degrees, preferably substantially equal to approximately 3 degrees.

3. Assembly (100, 200) as claimed in claim 2, **characterized in that** the conically tapered female fitting cavity (2a) has a length (L1) of between approximately 4 mm and approximately 5 mm.

4. Assembly (100, 200) as claimed in any of claims 1 through 3, **characterized in that** it has a length (L) of between approximately 8 mm and approximately 16 mm.

5. Assembly (100, 200) as claimed in any of claims 1 through 4, **characterized in that**:
- the dental implant (1) is provided with an outer thread (5) in order to be inserted by screwing into the maxillary or mandibular bone of the patient,
- the dental implant (1) has a female screwing socket (6) arranged in a continuation of the conically tapered female fitting cavity (2a) and accessible through the conically tapered female cavity (2a).

6. Assembly (100, 200) as claimed in claim 5, **characterized in that** the female screwing socket (6) has a cross section with three lobes (6a, 6b, 6c).

7. Assembly (200) as claimed in any of claims 1 through 6, **characterized in that** the conically tapered male fitting part (300) of the final abutment (3) has a substantially frustoconical surface (7) with an apex angle (β) equal to that of the conically tapered female fitting cavity (2a) of the dental implant (1).

8. Assembly (200) as claimed in any of claims 1 through 7, **characterized in that** the final abutment (3) is made of titanium or of a titanium alloy of the same kind as that forming the dental implant (1).

9. Assembly (200) as claimed in any of claims 1 through 8, **characterized in that** the internal diameter (D1) of the female cavity (2a) of the receiving means (2) and the external diameter (D2) of the male part (300) of the first connection means (30) are such that, when the final abutment (3) is engaged in the dental implant (1), the conical connection is obtained over a substantially frustoconical surface (S2) with a length (L3) of between approximately 3.5 mm and approximately 4.4 mm.

10. Assembly (100) as claimed in any of claims 1 through 9, **characterized in that**:
- the dental implant (1) is made of a metallic biocompatible material such as titanium or a titanium alloy,
- the cicatrization component (8) is made of polyetheretherketone.

11. Assembly (100) as claimed in any of claims 1 through 10, **characterized in that** the internal diameter (D1) of the female cavity (2a) of the receiving means (2) and the external diameter (D3) of the male part (800) of the second connection means (80) are such that, when the temporary cicatrization component (8) is engaged in the dental implant (1), the conical connection is obtained over a substantially frustoconical surface (S1) with a length (L2) of between approximately 2 mm and approximately 3.5 mm.

12. Assembly (100) as claimed in any of claims 1 through 11, **characterized in that** the upper end (8a) of the temporary cicatrization component (8) has third connection means (81) for an extraction tool.

13. Assembly (100) as claimed in any of claims 1 through 12, **characterized in that**, when the temporary cicatrization component (8) is engaged in the dental implant (1), the upper end (8a) of the temporary cicatrization component (8) protrudes above the distal connection end (1a) of the dental implant (1) by a length (L3) of between approximately 2.5 mm and approximately 6 mm.
